(19) Europäisches Patentamt
European Patent Office
Office européen des brevets

(11) EP 2 487 803 A1

(12) EUROPEAN PATENT APPLICATION
published in accordance with Art. 153(4) EPC

(43) Date of publication:
15.08.2012 Bulletin 2012/33

(51) Int Cl.:
H04B 3/54 (2006.01)    H04L 29/02 (2006.01)

(21) Application number: 09850285.9

(22) Date of filing: 16.12.2009

(86) International application number:
PCT/KR2009/007524

(87) International publication number:
WO 2011/043514 (14.04.2011 Gazette 2011/15)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(30) Priority: 09.10.2009 KR 20090096348

(71) Applicant: Korea Railroad Research Institute
Uiwang-city, Gyeonggi-do 437-757 (KR)

(72) Inventors:
• SONG, Yong-Soo
Uiwang-si
Gyeonggi-do 437-770 (KR)
• HAN, Seong-Ho
Yongin-city
Gyeonggi-do 448-150 (KR)
• CHOI, Sung-Kyou
Seoul 134-061 (KR)

(74) Representative: Petraz, Gilberto Luigi et al
GLP S.r.l.
Piazzale Cavedalis 6/2
33100 Udine (IT)

(54) TRAIN NETWORK DATA COMMUNICATION SYSTEM USING POWER LINE AND METHOD THEREOF

(57) Disclosed herein is a train network system and method using a power line. The train network data communication system includes a TCMS control unit configured to send control commands to a PLC adaptor via the power line using FSK communication in order to perform low-speed PLC data communication, and configured to provide the functionality of sending and receiving data via PLC, the PLC adaptor connected to the TCMS control unit, and configured to send and receive the control command and the data via the power line, a sensor connected to the PLC adaptor, and configured to provide train information input and output signals, such as train system information related to a Heating, Ventilating and Air Conditioning (HVAC) system, and a TCMS interface unit connected to the PLC adaptor, connected to the TCMS control unit, via the power line.

[FIG. 1.]

**Description**

**Technical Field**

The present invention relates to a train network system using a power line, and, more particularly, to a train network data communication system and method using a power line, in which a Train Control Management System (TCMS) sends and receives train system information, acquired from sensors, a Heating, Ventilating and Air Conditioning (HVAC) system, etc., via Power Line Communication (PLC) using PLC adaptors installed in the distribution line of a train and a carrier frequency set to a frequency lower than 450 kHz in a high-speed data communication manner, and determines the information of a train control system and abnormality.

**Background Art**

The term 'Power Line Network (PLN)' refers to a technology that performs communication by carrying voice and data on high-frequency signals in the range of hundreds of KHz to tens of KHz via a power line that supplies electric power.

Meanwhile, although Power Line Communication (PLC) has performed PLC communication at a low speed of 10 kbps because the available frequency band thereof has been restricted chiefly to a frequency band of 10 k ~ 450 kHz. Recently, it is possible to use a wide frequency band of 2 M ~ 30 MHz because the restrictions have been eased, and it is expected that a transmission speed of tens of Mbps will be achieved. Since high-speed PLC is chiefly used for broadband Internet access, it is often referred to as Broadband over Power Line (BPL).

Table 1

| Item | High-speed PLC | Low-speed PLC |
|---|---|---|
| Technical characteristics | -speed equal to or higher than 10 Mbps-broadband: 1 ~ 30 MHz-modulation method: OFDM-IP-based | -speed of 5 - 10 kbps-narrowband: equal to or lower than 450kHz-moduation method: Spread Spectrum (SS) or its variation-not IP-based |
| Application field | -home network and Internet sharing video/audio streaming | -home network (control and Automation)-information household electric appliance control-remote metering-building control |
| Trends in the industry | -U.S. AT&T, AOL and HP considers the use of high-speed PLC-Spanish ENDESA considers the use of high-speed PLC | - Italian ENEL used low-speed PLC in remote electric power metering in 2001. |
| Prospects | Although a low-speed PLC modem has been commercialized, the system is not based on the IP. Accordingly, there will be a rapid growth to high-speed PLC in the all IP environment in the future. | |

The basic principle of PLC is to carry data over a power line. For this purpose, a PLC modem data for carrying data over a power line is required. A PLC modem is a device for converting an Ethernet signal and a PLC signal into each other between Ethernet interface equipment and a power line. A device, such as a Personal Computer (PC), and a PLC modem is connected by a Local Area Network (LAN) cable, and the power cable of the PLC modem is connected to a power outlet and then used.

In a PLC modem, a PLC chip and a D/A converter (or an A/D converter) are in charge of modulation. Two types of modulation methods, that is, OFDM and Spread Spectrum (SS), are chiefly used as modulation methods.

Here, OFDM stands for Orthogonal Frequency Division Multiplexing. The most important advantage of OFDM is that high speed can be easily achieved. OFDM is used for PLC modems for home networks, which require high transmission speed.

Meanwhile, spread spectrum is a method of carrying the entire data over a single carrier, unlike OFDM. Since only a single carrier can be used regardless of the spreading of a band, spread spectrum has difficulty in achieving high speed, compared to OFDM.

Therefore, although the speed of a PLC modem using spread spectrum is about 2.5 M ~ 24 Mbps even when it uses a band of 4 M ~ 20 MHz and therefore the speed is low, spread spectrum has the advantage of reducing the influence of noise thanks to the mechanism of spreading thereof.

Because of this characteristic, PLC modems using spread spectrum are used in high-noise places, such as a factory, and for equipment control that does not require high speed but requires the accurate transmission of data.

Furthermore, since PLC uses a power line having bus-type wiring as a transmission path, it is a band sharing network, like a wireless LAN. Since there is the possibility of colliding with a signal sent by some other modem when modems freely send data over a band sharing network, a mechanism for sequentially sending data to prevent signals from colliding with each other (an access method) is indispensable and each of all PLC modems is equipped with this functionality.

This functionality is called multiple access. An Ethernet network and a wireless LAN use a multiple access method called Carrier Sense Multiple Access with Collision Detection (CSMA/CD). CSMA/CD is a multiple access method based on the rule of「seconding data while communication is not being performed after checking whether some other device is communicating」(CSMA) and the rule of「performing transmission after each device has waited for a none-predetermined time in order to prevent a signal from colliding with another signal」(CA: Collision Detection).

Furthermore, when PLC is used, home networking, information household electric appliances and power network management are enabled, so that companies in the related industrial fields expect that new services and potential markets will be activated using PLC.

In particular, a high-speed access technology using a PLN and a low-speed control technology using a home network are attracting attention from domestic and foreign communication companies or electric power companies as next generation communication technologies.

Currently, the frequency which is used to send power in Korea is an AC frequency of 60 Hz. Household electric appliance products convert the AC frequency of 60 Hz into a DC frequency using a power converter, and then use the resulting frequency. It may be possible to carry communication signals in a band of frequencies, other than 60 Hz, that is, a band of 1 ~ 30 MHz frequencies, and perform high-speed communication.

The unification of protocols is a precondition. KEPCO already performed PLC using such a low frequency in 1960s. This PLC is too poor to call it communication in terms of capacity and speed.

PLC does not require additional wiring, and only it is necessary to insert the plug of a PLC adaptor connected to a power line into a power outlet. Since PLC uses a technology for communication at a high frequency equal to or higher than tens of MHz, it is possible to send data without affecting general household electric appliance products and electric devices. However, an influence may be exerted by load on a power line, and communication protocols should be unified so as to perform high-speed communication.

However, there is a problem in that it is difficult for a TCMS to receive the real-time signals of a sensor and the like using a power line deployed in the distribution line of a train car or an electric train car, perform A/D conversion on the signals, send and receive the signals via PLC and then determine abnormality.

**Disclosure**

**Technical Problem**

Accordingly, the present invention has been made keeping in mind the above problems occurring in the prior art, and an object of the present invention is to provide a train network data communication system and method using a power line, in which the control unit of a TCMS sends and receives train system information, acquired from sensors, a HVAC system, etc., using a Frequency Shift Keying (FSK) communication method via PLC adaptors installed in the distribution line of a train car or an electric train car and a power line and signals separated by the high-frequency filter of a PLC modem using a carrier frequency lower than 450 kHz in a high-speed data communication manner, and determines abnormality based on the information of a train control system.

**Technical Solution**

In order to accomplish the above object, the present invention provides a train network data communication system using a power line, including a TCMS control unit configured to send control commands to a PLC adaptor via the power line using FSK communication in order to perform low-speed PLC data communication, and configured to provide the functionality of sending and receiving data via PLC; the PLC adaptor connected to the TCMS control unit, and configured to send and receive the control command and the data via the power line; a sensor connected to the PLC adaptor, and configured to provide train information input and output signals, such as train system information related to a Heating, Ventilating and Air Conditioning (HVAC) system; and a TCMS interface unit connected to the PLC adaptor, connected to the TCMS control unit, via the power line.

Here, the PLC adaptor may be connected to PLC adaptors, installed in remaining train cars of a train, via the power line.

The PLC adaptor may include the A/D signal conversion unit of a PLC modem configured to send and receive data via the power line; a line driver circuit connected to the A/D signal conversion unit of the PLC modem; and a coupler connected to the line driver and the power line, and configured to be used as a PLC interface.

The A/D signal conversion unit of the PLC modem may include a frequency modulation/demodulation unit configured to modulate data, received from an IP network, to produce a PLC signal in such a way as to add a high frequency signal to a 60Hz signal using an FSK method, or to demodulate a signal received from a PLC network; a digital I/O unit configured to send digital data, to be sent or received, to the microcontroller processor of the TCMS control unit; a filter unit configured to filter out only a set frequency band component from a signal output from the digital I/O unit or analog I/O unit; and an analog I/O unit configured to send and receive analog transmission/reception data, received via the coupler, to the line drive circuit.

The line driver circuit may include an amplification unit for amplifying a signal; and a bypass unit for, if the PLC modem is in reception mode, bypassing received data input from the coupler and sending the data to the A/D signal conversion unit of the PLC modem.

The coupler may include a converter that functions to connect the power line and the line driver circuit to each other, to send a signal, amplified by the A/D signal processing unit, via the power line in transmission mode, to send a modulated signal, received from the power line, to the line drive circuit in reception mode, to block a 60Hz signal from the power line, and to filter out harmonics from a signal to be transmitted.

The power line and the PLC adaptors may use low-speed PLC, an available band of which is restricted to a band of frequencies lower than 450 kHz.

The coupler may include a diode D, that is, a power line interface unit, configured to protect a circuit from a spike or excessive voltage from an outside; a primary-side capacitor C1 configured to have an impedance higher than a reference value with respect to an AC power signal; the primary-side capacitor configured to act as an impedance lower than the reference value with respect to a secondary-side data signal, thereby blocking an AC power signal; and a transformer configured such that since it is impossible to freely change an inductance value, a High Pass Filter (HPF) for passing 132.45 KHz, that is, a working frequency, therethrough is formed by determining a line coupling C1 to be coupled with L1 and a Band Pass Filter (BPF) is formed by connecting a conductor to L2 in parallel on a secondary side, thereby sending a signal, provided by a modulator/demodulator, via the power line.

Furthermore, the TCMS control unit may assign respective system IDs to the PLC adaptors and the sensors so that they can be distinguished from each other.

In order to accomplish the above object, the present invention provides a train network data communication method using a power line, including (a) initializing software of a TCMS control unit, verifying system IDs respectively assigned to a PLC adaptor and a sensor installed in each train car, debugging the line and a system if the system IDs have not been verified, and requesting data of the sensor from the train car or an electric train car via the PLC adaptor and the power line if the system IDs have been verified; (b) determining whether data requested by software of a TCMS control unit has been received, sending a data request message if the data has not been received, outputting a warning message if there is no response, and determining whether a condition in question is a normal condition if there is a response; and (c) if data has been received or the condition in question is an normal condition, storing train information data from a sensor via the power line from a PLC adaptor in memory, printing the train information data, and repeating the above steps.

**Advantageous Effects**

As described above, the train network data communication system and method using a power line according to the present invention have the advantage of the control unit of a TCMS sending and receiving train system information, acquired from sensors, a HVAC system, etc., using a Frequency Shift Keying (FSK) communication method via PLC adaptors installed in the distribution line of a train car or an electric train car and a power line and signals separated by the high-frequency filter of a PLC modem using a carrier frequency lower than 450 kHz in a high-speed data communication manner, and determining abnormality based on the information of a train control system.

The present invention is directed to the communication method of sending a communication signal using the power line deployed in passenger cars and a locomotive train and receiving signals separated using the high-frequency filter of the PLC modem. Although the present invention has the economic advantage of not requiring additional installation expenses because a distribution line itself which is equipment in a train, that is, a power line, is used as a signal transmission path, the communication path is subjected to unfavorable conditions. Accordingly, the present invention is intended to be used as a single system, rather than a high-speed data communication system.

However, recently, as wireless communication technology is developing rapidly, PLC schemes in which a power line can overcome conditions unfavorable for a communication line have been proposed. The present invention provides the effect of checking the information of a train control system and the abnormality of the train using the power line module which uses a carrier frequency lower than 450 KHz and can be immediately commercialized without being restricted by a wireless telegraphy act.

## Description of Drawings

Fig. 1 is a diagram showing the configuration of a TCMS using a power line according to the present invention;
Fig. 2 is a diagram showing the configuration of a TCMS control unit according to an embodiment of the present invention;
Fig. 3 is a block diagram showing a PLC unit including a general PLC modem;
Fig. 4 is a power line model impedance circuit;
Fig. 5 is the PLC interface of a TCMS interface unit;
Fig. 6 is a photo showing the complete system of an A/D converter;
Fig. 7 is a screen of the software of a TCMS; and
Fig. 8 is a flowchart showing the software of a TCMS control unit.

## Mode for Invention

Preferred embodiments of the present invention will be described in detail below with reference to the accompanying drawings described.

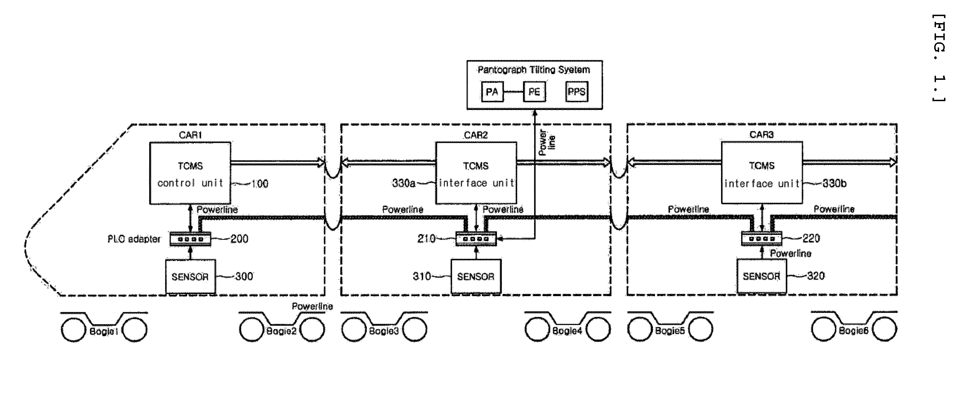

Fig. 1 is a diagram showing the configuration of a TCMS using a power line according to the present invention.

The TCMS using a power line according to the present invention includes a TCMS control unit 100, PLC units (PLC adaptors) 200, 210 and 220, sensors 300, 310 and 320, and TCMS interface units 330a and 330b.

In the present invention, a communication module is fabricated using a communication module that is more resistant to the poor noise characteristics of a power line than currently commercialized PLC modules and that uses Frequency Shift Keying (FSK), that is, one of the communication methods advantageous to low-speed data communication.

The TCMS control unit 100 functions to send control commands to the PLC modems of the PLC adaptors 200, 210 and 220 and to send and receive data via PLC.

Here, each of the PLC units (PLC adaptors 200, 210 and 220) includes a PLC modem, a line driver and a power line interface unit, is connected to the TCMS control unit 100, and sends and receives control commands and data over a power line.

Furthermore, the PLC adaptor 200 is connected to other PLC adaptors 210 and 220, installed in other railroad cars of a train, via a power line, and operates in conjunction with a pantograph tilling system.

Furthermore, the sensors 300, 310 and 320 are connected to the PLC adaptors 200, 210 and 220, respectively, and provide train information input and output signals including train system information such as HVAC.

Meanwhile, the TCMS interface units 330a and 330b are connected to the PLC adaptors 200, 210 and 220, connected to the TCMS control unit 100, via a power line.

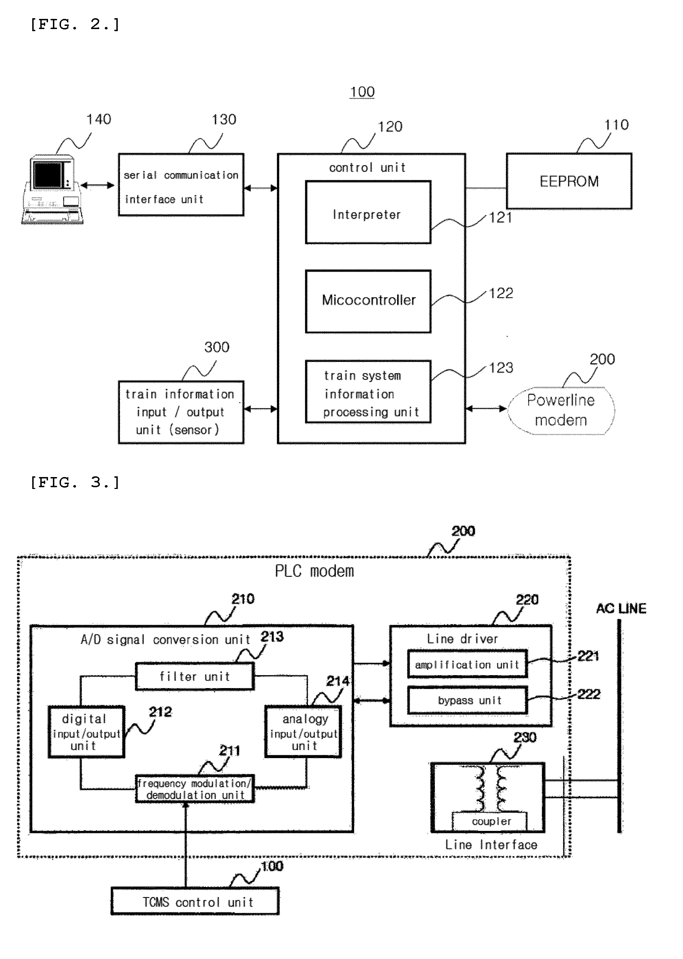

Fig. 2 is a diagram showing the configuration of a TCMS control unit according to an embodiment of the present invention.

The TCMS control unit 100 includes an EEPROM 110, a control unit 120, a serial communication interface unit 130, and a computer 140. The control unit 120 is connected to a train information input and output unit (sensor) 300 and a PLC modem 200, and includes an interpreter 121, a microcontroller 122, and a train system information processing unit 123.

Furthermore, the control unit 120 functions to send control commands to the PLC modem using a Frequency Shift Keying (FSK) communication method advantageous to low-speed PLC data communication, and send and receive data via a power line.

Fig. 3 is a block diagram showing a PLC unit including a general PLC modem.

Each of the PLC units (PLC adaptors) 200, 210 and 220 includes a PLC modem, a line driver, and a power line interface unit.

Here, the A/D signal conversion unit 210 of the PLC modem 210 includes a frequency modulation/demodulation unit 211, a digital input/output (I/O) unit 212, a filter unit 213, and an analog I/O unit 214.

The function of the PLC modem 210 is to send and receive data via a power line, and the process of sending and receiving data will be described below.

When the PLC modem 210 receives a transmission signal from the TCMS control unit 100, the digital I/O unit first receives and interprets the transmission signal, sets a transmission/reception control signal to "transmission," and determines to amplify the signal using the amplifier 221 of the line driver circuit 220.

Furthermore, the frequency modulation/demodulation unit 211 functions to modulate data, received via an IP network, to produce a PLC signal by adding the high frequency signal to a 60 Hz signal using a FSK method and demodulate a signal received via a PLC network.

Furthermore, the digital I/O unit 212 sends sent/received digital data to the microcontroller processor of the TCMS control unit 100.

Meanwhile, the filter unit 213 filters out only a set frequency band from a signal output from the digital I/O unit 212 or the analog I/O unit 214.

Furthermore, the analog I/O unit 214 provides the function of exchanging received analog sending/reception data with the line drive circuit via the coupler 230.

The line driver circuit 220 includes an amplifier 221 and a bypass unit 222.

Here, when the PLC modem is in reception mode, the bypass unit 222 bypasses received data, input from the coupler 230, and sends it to an A/D signal conversion unit.

The coupler 230 is connected to the power line and the line driver circuit. The coupler 230 sends a signal, amplified by the A/D signal processing unit, via the power line in transmission mode, and sends a modulated signal, received from the power line, to the A/D signal conversion unit 210 of the PLC modem via the line drive circuit 220 in reception mode.

Here, the frequency modulation/demodulation unit 211 follows the following PLC-related regulations:

Table 2

| PLC-related Regulations | | | | |
|---|---|---|---|---|
| National frequency (kHz) | Korea | Japan | Europe (CENELEC) | U.S. (FCC) |
| ~95 | use of all equal to or lower than output of 10 W | use of all equal to or lower than output of 10 W | electric provider | prohibition of use |
| -125 | | | random user | |
| -140 | | | existence of regulations | |
| -148.5 | | | random user | random user |
| -450 | | | prohibition of use | |

Referring to the above PLC-related regulations, the Korean Wireless Telegraphy Act stipulates that "the emitted frequency and available output of power line carrier equipment shall fall within the range of 1.9 KHz ~ 450 KHz, and the high frequency output of transmission equipment shall be equal to or lower than 10 W." The communication acts of various countries are shown in Table 2.

As shown in Table 2, PLC-related regulations have not been enacted yet in Japan and Korea. Accordingly, the system is constructed using an STS PLC modem which is designed using Frequency Shift Keying (FSK) that is suitable for a frequency in the range of 125 ~ 140 kHz set according to the strict European regulations and that is robust to noise.

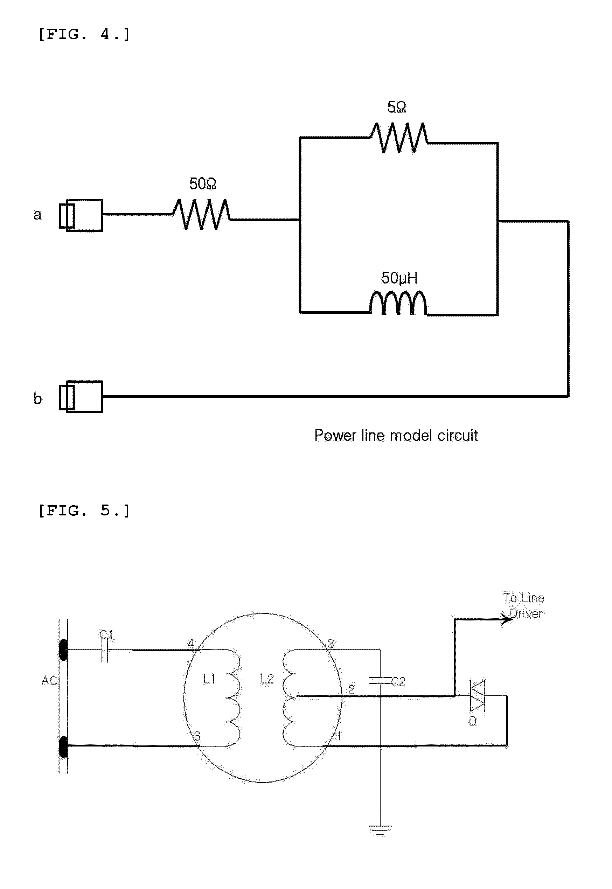

Fig. 4 is a power line model impedance circuit.

One of the important factors of PLC is the magnitude of the impedance of a power line. When the electrical characteristics of a power line are known, the interfacing of the power line, that is, coupling, can be appropriately performed.

Furthermore, according to the regulations of CENELEC, a power line model is prescribed, as shown in Fig. 4. That is, a 50 Ω resistor is modeled as a 5 Ω resistor and a 50 uH parallel impedance in series.

Furthermore, referring to the power line model circuit, the impedance between terminals 'a' and 'b' may be expressed by the following Equations 1 and 2 when a source is sinusoid:

$$R_x(\tau) = \lim_{T \to \infty} \frac{1}{T} \int_{-T/2}^{T/2} x(t)x(t+\tau)d\tau$$

$$For \ \infty < \tau < \infty$$

$$R_x(\tau) = \lim_{T \to \infty} \frac{1}{T_0} \int_{-T_0/2}^{T_0/2} x(t)x(t+\tau)d\tau$$

$$For \ \infty < \tau < \infty$$

$$(1)$$

$$R_x(\tau) = \frac{1}{K}\left(\frac{1}{T_0}\right)\int_{-T_0/2}^{T_0/2} x(t)x(t+\tau)dt$$

$$For -\infty < \tau < \infty$$

$$where$$

$$K = \frac{1}{T_0}\int_{-T_0/2}^{T_0/2} x^2(t)dt$$

$$(2)$$

Since the above equation is 4.0 when it is represented only using magnitude, impedance Zab = 54 $\Omega$. That is, according to the regulations of CENELEC, the impedance of the power line is 54 $\Omega$ from the point of view of the PLC modem.

Here, the power line interface is an interface that connects the power line having the above-described impedance and the line driver circuit to each other.

Furthermore, the transformer used in the coupler functions to separate the power line and the PLC modem circuit from each other, provide a transmission signal to the power line, receive a signal from the power line, and block a 60 Hz signal from the power line. Moreover, the transformer functions to filter out harmonics from a signal to be transmitted.

Fig. 5 is the PLC interface of a TCMS interface unit.

Here, the diode D of the coupler 230 used as the power line interface unit functions to protect the circuit from a spike or excessive voltage from the outside. A primary-side capacitor C1 functions to block a power signal in such a way as to act as impedance higher than a reference value with respect to an AC power signal and act as impedance lower than a reference value with respect to a secondary-side data signal.

In general, since in the case of a transformer being used, it is impossible to freely change an inductance value, a High Pass Filter (HPF) for passing 132.45 KHz, that is, a working frequency in the present invention, therethrough is formed by determining a line coupling C1 to be coupled with L1 and a Band Pass Filter (BPF) is formed by connecting a conductor to L2 in parallel on the secondary side, thereby carrying and sending a signal, output from a modulator/demodulator, on and via the power line. On the secondary side of the transformer, it is possible to design a resonator having a resonance frequency of 132.45 kHz using the capacitor C2, as on the primary side.

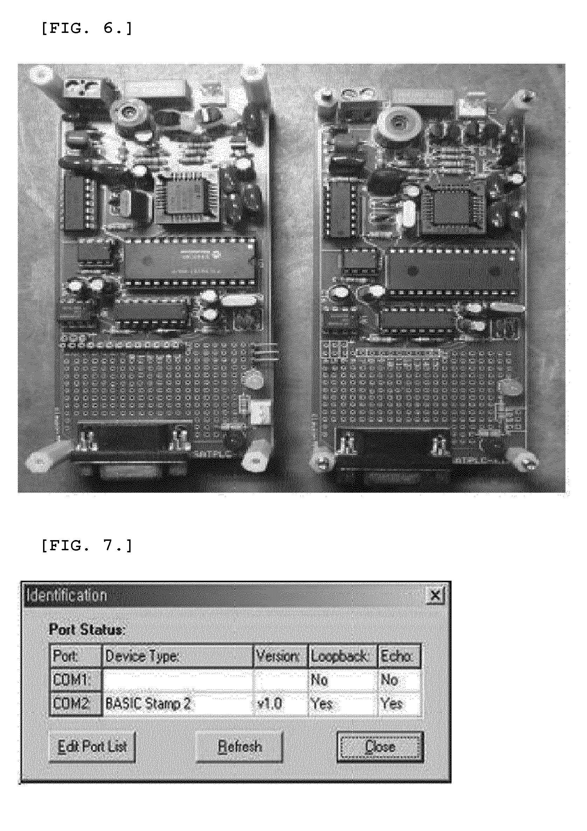

Fig. 6 is a photo showing the complete system of an A/D converter.

Here, in order to directly receive and digitize an analog signal to be measured, such as the real-time signal of an HVAC system, a single IC-type A/D converter is generally used. In general, a single IC-type A/D converter requires a filter circuit and a wave shaping circuit for appropriately changing the size of a signal, such as an amplifier, in order to eliminate internal noise and extract only a necessary signal. The conversion time, resolution and accuracy should be taken into consideration depending on the performance of the system being used.

Fig. 7 is a screen of the software of a TCMS, that is, a screen of a program which verifies the system ID of a TCMS and performs initialization.

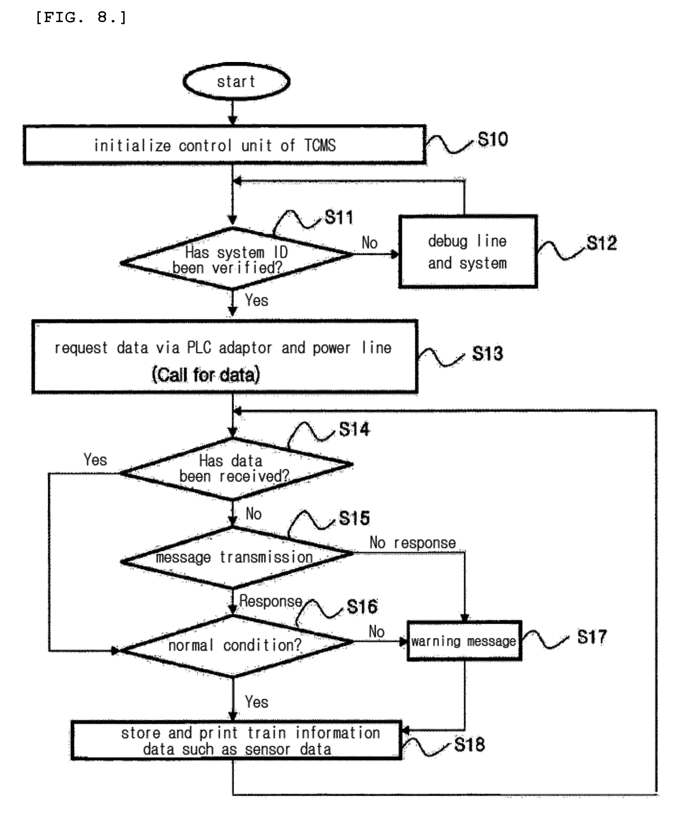

In the design of the software, after the TCMS has been initialized, a central management system maintains the state of reception from a modem, and receives train system information from devices in real time and then successively stores it in memory until a separate interrupt is received. The principal routine thereof will be described in detail in Fig. 8.

Fig. 8 is a flowchart showing the software of a TCMS control unit.

Here, the operation of the software of the TCMS control unit 100 initializes the TCMS control unit 100 at step S10, verifies respective system IDs assigned to components, such as a PLC adaptors and a sensor, installed in each electric train car at step S11, debugs the line and the system if the system IDs have not been verified at step S12, and requests the data of the sensor from each train car or each electric train car via the PLC adaptor and the power line if the system IDs have been verified at step S13.

Furthermore, the operation of the software of the TCMS control unit 100 determines whether requested data has been received at step S14, sends a data request message if the data has not been received at step S15, outputs a warning message if there is no response at step S17, determines whether the condition in question is a normal condition if there is a response at step S16, stores train information data received from the sensors via the power line from the PLC adaptors 200, 210 and 220 in memory and also prints it at step S18 if the condition in question is a normal condition, and then repeats step S14.

Furthermore, if data is received at step S14, the software of the TCMS control unit 100 determines whether the condition in question is a normal condition at step S16, stores train information data received from the sensors via the power line from the PLC adaptors 200, 210 and 220 in memory and also prints it if it is a normal condition at step S18, and then repeats step S14.

As described above, although the above description has been given in conjunction with the preferred embodiments of the present invention, those having common knowledge in the technology field to which the present invention belongs could vary and modify the present invention in various manners within the range which does not depart from the technical spirit and scope of the present invention described in the following claims.

**Industrial Applicability**

The present invention relates to a train network system using a power line, and, more particularly, to a train network data communication system and method using a power line, in which a TCMS sends and receives train system information, acquired from sensors, a HVAC system, etc., via PLC using PLC adaptors installed in the distribution line of a train and a carrier frequency set to a frequency lower than 450 kHz in a high-speed data communication manner, and determines whether the train system is abnormal based on the train system information.

**Claims**

1. A train network data communication system using a power line, comprising:

   a Train Control Management System (TCMS) control unit configured to send a control command to a PLC adaptor via the power line using Frequency Shift Keying (FSK) communication in order to perform low-speed PLC data communication, and configured to provide functionality of sending and receiving data via PLC;
   the PLC adaptor connected to the TCMS control unit, and configured to send and receive the control command and the data via the power line;
   a sensor connected to the PLC adaptor, and configured to provide train information input and output signals, such as train system information related to a Heating, Ventilating and Air Conditioning (HVAC) system; and
   a TCMS interface unit connected to the PLC adaptor, connected to the TCMS control unit, via the power line.

2. The train network data communication system using a power line as set forth in claim 1, wherein the PLC adaptor is connected to PLC adaptors, installed in remaining train cars of a train, via the power line.

3. The train network data communication system using a power line as set forth in claim 1, wherein the PLC adaptor comprises:

   an A/D signal conversion unit of a PLC modem configured to send and receive data via the power line;
   a line driver circuit connected to the A/D signal conversion unit of the PLC modem; and
   a coupler connected to the line driver and the power line, and configured to be used as a PLC interface.

4. The train network data communication system using a power line as set forth in claim 1, wherein the A/D signal conversion unit of the PLC modem comprises:

   a frequency modulation/demodulation unit configured to modulate data, received from an IP network, to produce a PLC signal in such a way as to add a high frequency signal to a 60Hz signal using an FSK method, or to demodulate a signal received from a PLC network;
   a digital I/O unit configured to send digital data, to be sent or received, to a microcontroller processor of the TCMS control unit;
   a filter unit configured to filter out only a set frequency band component from a signal output from the digital I/O unit or analog I/O unit; and
   an analog I/O unit configured to send and receive analog transmission/reception data, received via the coupler, to the line drive circuit.

5. The train network data communication system using a power line as set forth in claim 3 or 4, wherein the line driver circuit comprises:

   an amplification unit for amplifying a signal; and
   a bypass unit for, if the PLC modem is in reception mode, bypassing received data input from the coupler and sending the data to the A/D signal conversion unit of the PLC modem.

6. The train network data communication system using a power line as set forth in claim 3, wherein the coupler comprises a converter that functions to connect the power line and the line driver circuit to each other, to send a signal, amplified by the A/D signal processing unit, via the power line in transmission mode, to send a modulated signal, received from the power line, to the line drive circuit in reception mode, to block a 60Hz signal from the power line, and to filter out harmonics from a signal to be transmitted.

7. The train network data communication system using a power line as set forth in claim 1, wherein the power line and the PLC adaptors use low-speed PLC, an available band of which is restricted to a band of frequencies lower than 450 kHz.

8. The train network data communication system using a power line, wherein the coupler comprises:

a diode D, that is, a power line interface unit, configured to protect a circuit from a spike or excessive voltage from an outside;
a primary-side capacitor C1 configured to have an impedance higher than a reference value with respect to an AC power signal;
the primary-side capacitor configured to act as an impedance lower than the reference value with respect to a secondary-side data signal, thereby blocking an AC power signal; and
a transformer configured such that since it is impossible to freely change an inductance value, a High Pass Filter (HPF) for passing 132.45 KHz, that is, a working frequency, therethrough is formed by determining a line coupling C1 to be coupled with L1 and a Band Pass Filter (BPF) is formed by connecting a conductor to L2 in parallel on a secondary side, thereby sending a signal, provided by a modulator/demodulator, via the power line.

9. The train network data communication system using a power line as set forth in claim 1, wherein the TCMS control unit assigns respective system IDs to the PLC adaptors and the sensors so that they can be distinguished from each other.

10. A train network data communication method using a power line, comprising:

(a) initializing software of a TCMS control unit, verifying system IDs respectively assigned to a PLC adaptor and a sensor installed in each train car, debugging the line and a system if the system IDs have not been verified, and requesting data of the sensor from the train car or an electric train car via the PLC adaptor and the power line if the system IDs have been verified;
(b) determining whether data requested by software of a TCMS control unit has been received, sending a data request message if the data has not been received, outputting a warning message if there is no response, and determining whether a condition in question is a normal condition if there is a response; and
(c) if data has been received or the condition in question is an normal condition, storing train information data from a sensor via the power line from a PLC adaptor in memory, printing the train information data, and repeating the above steps.

[FIG. 1.]

[FIG. 2.]

[FIG. 3.]

[FIG. 4.]

Power line model circuit

[FIG. 5.]

[FIG. 6.]

[FIG. 7.]

[FIG. 8.]

```
                    ╭───────────╮
                    │   start   │
                    ╰───────────╯
                          │
                          ▼
        ┌─────────────────────────────────────┐
        │   initialize control unit of TCMS    │ ～ S10
        └─────────────────────────────────────┘
                          │
                          ▼
                    ╱ ╲  ～ S11
                   ╱   ╲         No    ┌──────────────┐
                  ╱ Has system ID ╲───────▶│  debug line  │ ～ S12
                  ╲ been verified?╱        │  and system  │
                   ╲   ╱                 └──────────────┘
                    ╲ ╱
                     │ Yes
                     ▼
        ┌─────────────────────────────────────┐
        │ request data via PLC adaptor and power line │ ～ S13
        │            (Call for data)          │
        └─────────────────────────────────────┘
                     │
                     ▼
              ╱ ╲  ～ S14
    Yes      ╱   ╲
    ◀───────╱ Has data ╲
            ╲ been received?╱
             ╲   ╱
              ╲ ╱
               │ No   ～ S15
               ▼
              ╱ ╲
             ╱   ╲    No response
            ╱ message ╲──────────────────┐
            ╲ transmission╱              │
             ╲   ╱                       │
              ╲ ╱                        │
               │ Response  ～ S16        │
               ▼                         ▼
              ╱ ╲             ┌──────────────────┐
             ╱   ╲   No       │ warning message  │ ～ S17
            ╱ normal condition? ╲─────▶│                  │
            ╲   ╱               └──────────────────┘
             ╲ ╱                         │
              │ Yes                      │
              ▼                          ▼
        ┌─────────────────────────────────────┐
        │  store and print train information   │
        │     data such as sensor data         │ ～ S18
        └─────────────────────────────────────┘
```

## INTERNATIONAL SEARCH REPORT

International application No.

**PCT/KR2009/007524**

**A. CLASSIFICATION OF SUBJECT MATTER**

***H04B 3/54(2006.01)i, H04L 29/02(2006.01)i***

According to International Patent Classification (IPC) or to both national classification and IPC

**B. FIELDS SEARCHED**

Minimum documentation searched (classification system followed by classification symbols)
IPC 9: H04B; B61L; B60R

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: power, line, communication, train, vehicle

**C. DOCUMENTS CONSIDERED TO BE RELEVANT**

| Category* | Citation of document, with indication, where appropriate, of the relevant passages | Relevant to claim No. |
|---|---|---|
| X | JP 2007-099123 A (MITSUBISHI ELECTRIC CORP) 19 April 2007 | 1-2 |
| Y | Figures 2, 4, claims 1-4. | 3-9 |
| Y | KR 10-2005-0001490 A (LG ELECTRONICS INC.) 07 January 2005<br>Claims 1-3, 8-11, 19. | 3-7,9 |
| Y | JP 2005-278082 A (YAZAKI CORP) 06 October 2005<br>Abstract, figures 1-2. | 8 |
| A | KR 10-2009-0091606 A (KAICOM CO., LTD.) 28 August 2009<br>Abstract, claim 1. | 1-10 |

☐ Further documents are listed in the continuation of Box C. ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 25 OCTOBER 2010 (25.10.2010) | **25 OCTOBER 2010 (25.10.2010)** |

| Name and mailing address of the ISA/KR | Authorized officer |
|---|---|
| Korean Intellectual Property Office<br>Government Complex-Daejeon, 139 Seonsa-ro, Daejeon 302-701, Republic of Korea<br>Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2009/007524**

| Patent document cited in search report | Publication date | Patent family member | Publication date |
|---|---|---|---|
| JP 2007-099123 A | 19.04.2007 | NONE | |
| KR 10-2005-0001490 A | 07.01.2005 | NONE | |
| JP 2005-278082 A | 06.10.2005 | NONE | |
| KR 10-2009-0091606 A | 28.08.2009 | NONE | |

Form PCT/ISA/210 (patent family annex) (July 2009)